# FASCICULE DE BREVET EUROPEEN

(11) **EP 3 167 619 B1**
(45) Date de publication et mention de la délivrance du brevet: **28.10.2020**
(21) Numéro de dépôt: 15741516.7
(22) Date de dépôt: 09.07.2015
(51) Int. Cl.: H04N 21/438, H04N 21/81

(54) **PROCEDE POUR LIVRER UN OBJET APPLICATIF ASSOCIE A UN FLUX TV NUMERIQUE**
VERFAHREN ZUR BEREITSTELLUNG EINES ANWENDUNGSOBJEKTS IN ZUSAMMENHANG MIT EINEM DIGITALEN TV-STROM
METHOD FOR DELIVERING AN APPLICATION OBJECT ASSOCIATED WITH A DIGITAL TV STREAM

(30) Priorité: 10.07.2014 FR 1456649
(43) Date de publication de la demande: 17.05.2017
(73) Titulaire: Softathome, 92700 Colombes (FR)
(72) Inventeur: MAKOWSKI, Wojciech, 78100 Saint Germain en Laye (FR)
(74) Mandataire: IPAZ
(86) Numéro de dépôt international: PCT/EP2015/065733
(87) Numéro de publication internationale: WO 2016/005511

(56) Documents cités:
- WO-A1-96/37075
- WO-A1-03/021958
- WO-A1-2006/003597
- WO-A2-2007/038726
- US-A1- 2006 085 828
- US-A1- 2009 187 946

## Description

La présente invention concerne un procédé pour livrer un objet applicatif associé à un flux TV numérique et un module fonctionnel intermédiaire mettant en œuvre ce procédé.

L'invention a en particulier trait au contexte de visualisation de chaînes TV numériques ou d'autres formes de contenu audiovisuel en direct ou retransmis. Ce contenu audiovisuel est de plus en plus souvent diffusé avec des applications offrant des fonctionnalités supplémentaires, telles que des fonctions interactives permettant par exemple l'accès à du contenu supplémentaire, le vote en ligne ou l'achat d'un produit associé. Ainsi, par exemple un décodeur audio-vidéo compatible est capable de jouer non seulement le contenu audio-vidéo, mais aussi d'exécuter une application distribuée avec le contenu audio-vidéo.

Plusieurs normes existent dans ce domaine, telles que par exemple HbbTV, mais pour chaque norme actuelle, tout ou partie d'un objet applicatif est inséré dans le flux audio-vidéo associé à cet objet applicatif. L'objet applicatif est inséré de façon répétitive, de temps à autre, dans le flux audio-vidéo et il est généralement appelé "objet carousel". Dans le cas où seulement une partie d'une application est présent dans l'objet, le reste de l'application est déjà enregistré sur le décodeur ou est récupéré via un réseau de communication connecté au décodeur. Lorsque le décodeur détecte un objet applicatif dans le flux audio-vidéo, il l'extrait du flux, complète par des ressources supplémentaires si nécessaire et exécute l'application complète. Cependant, une application peut être complètement fonctionnelle que lorsque une partie minimum de l'objet est reçue et toutes les ressources nécessaires sont disponibles. Cela signifie que généralement l'application ne fonctionne pas juste après le changement de chaîne. Ainsi, l'utilisateur doit attendre un laps de temps non négligeable avant d'être en mesure d'utiliser l'application associée à la nouvelle chaîne. Ce délai peut être considérable, et il dégrade la qualité de prestation des utilisateurs finaux.

WO 2006/003597 A1 divulgue de garder en cache les applications interactives des chaînes précédemment regardées.

La présente invention vise à réduire le temps nécessaire pour obtenir complètement une telle application.

Le but de la présente invention est de passer d'une chaîne TV ou d'un flux vidéo à une autre chaîne TV avec une latence réduite en ce qui concerne l'activation d'un objet applicatif (ou application logicielle) associé au flux vidéo, de façon à améliorer la qualité de prestation des utilisateurs finaux.

Selon la présente invention, le but défini ci-dessus est atteint avec un procédé selon les revendications

La réduction de temps est réalisée car le module fonctionnel intermédiaire pré enregistre l'objet applicatif pour différentes chaînes susceptibles d'être sélectionnées à la suite de la chaîne en cours de diffusion. Le module fonctionnel intermédiaire peut ainsi fournir un objet applicatif complet à un lecteur vidéo tout de suite après le changement de chaîne.

Le module fonctionnel intermédiaire peut être un dispositif matériel ou un processus/fonction logiciel ou un mélange des deux, qui est disposé entre un module de production ou de transmission en continue de contenu et un module consommateur consommant ce contenu.

La présente invention permet d'obtenir rapidement le fonctionnement des applications lors de changements de chaîne entre des chaînes les plus courantes.

Le module fonctionnel intermédiaire selon l'invention utilise avantageusement une mémoire, de préférence un espace mémoire pour chaque chaîne à prétraiter, de sorte qu'un objet applicatif peut être immédiatement atteint et lu en cas de changement de chaîne.

Le module fonctionnel intermédiaire peut recevoir des signaux d'une plate-forme telle qu'un module producteur et alimenter un ou plusieurs modules consommateurs tels qu'un module de lecture vidéo.

Le procédé selon l'invention permet une réduction de temps pour livrer un objet applicatif vers un module de lecture vidéo

Le module fonctionnel intermédiaire peut être composé de matériel et de logiciel configurés pour implémenter le procédé selon l'invention. Le matériel peut comprendre un microprocesseur capable d'identifier les objets applicatifs et les placer en mémoire à chaque fois que cela est nécessaire, de sorte que les objets applicatifs sont régulièrement actualisés.

Avantageusement, ladite au moins une autre chaîne est choisie parmi une pluralité de chaînes. Si la chaîne suivante est l'une de cette pluralité de chaînes, alors le temps pour livrer un objet applicatif lors d'un changement de chaîne sera inférieur au temps de changement de chaîne standard. Selon l'invention, ladite au moins une autre chaîne peut être choisie en prévoyant les chaînes suivantes qu'un utilisateur final est susceptible de choisir, en préréglant ces chaînes et prétraitant le flux de la chaîne. Lorsqu'un utilisateur final se règle effectivement sur l'une des chaînes prédites, le module fonctionnel intermédiaire peut transmettre immédiatement et directement l'objet applicatif à partir de la mémoire sans perdre du temps pour une détection de cet objet dans le flux vidéo.

Selon un mode de réalisation avantageux de la présente invention, ladite au moins une autre chaîne est déterminée à partir d'un plan de numérotation de chaînes. On peut également déterminer dans le module fonctionnel intermédiaire une pluralité d'autres chaînes qui sont voisines de la chaîne en cours de diffusion.

Selon un mode de réalisation préféré de l'invention, ladite au moins une autre chaîne est déterminée à partir d'une analyse statistique de chaînes sélectionnées dans l'historique. L'analyse statistique permet une prédiction d'un jeu de chaînes qui ont un haut niveau de probabilité d'être sélectionnées pour le changement de chaîne suivant. Il s'agit d'une manière astucieuse d'anticiper le changement de chaîne.

Le module fonctionnel intermédiaire pourrait apprendre les préférences d'utilisateurs en mémorisant quelles chaînes les utilisateurs sélectionnent typiquement après une autre chaîne. Chaque fois qu'un utilisateur zappe, on incrémente un compteur pour la nouvelle chaîne sélectionnée dans une liste « chaîne suivante » liée à la chaîne précédente.

Lorsqu'un utilisateur sélectionne ensuite une chaîne, le module fonctionnel intermédiaire peut présélectionner les n entrées de décompte le plus élevé dans la liste « chaînes suivante » de la chaîne nouvellement sélectionnée.

Des réglages fins supplémentaires sont possibles dans cette approche, par exemple, on pourrait enlever les entrées plus anciennes des listes de chaînes suivantes. Il faudrait pour cela se rappeler d'estampilles temporelles du moment où le zapping s'est produit. Cela permet d'adapter les comportements d'utilisateur qui peuvent changer avec le temps.

Selon un mode de réalisation avantageux de la présente invention, en cas d'une pluralité de modules consommateurs, ladite au moins une autre chaîne est déterminée à partir d'une analyse statistique de chaînes sélectionnées par module consommateur dans l'historique. Ainsi, on peut garder des listes de chaînes suivantes par module consommateur. Cela peut être utile dans le cas où un certain module consommateur est utilisé de façon prédominante par un certain membre d'une famille alors qu'un autre module consommateur est principalement utilisé par un autre membre.

Selon un autre mode de réalisation avantageux de la présente invention, en cas notamment d'une pluralité d'utilisateurs, ladite au moins une autre chaîne peut être déterminée à partir d'une analyse statistique de chaînes sélectionnées par utilisateur dans l'historique. Par exemple, on peut garder des listes de « chaîne suivante » par utilisateur. Cela autorise les comportements les plus pointus d'après les préférences/comportements des individus plutôt que d'après un comportement global influencé par la famille entière. Pour effectuer cela, on peut envisager un mécanisme qui identifie quel utilisateur commande un module consommateur donné à un certain moment. Cela peut être accompli de plusieurs manières comprenant, sans s'y limiter, l'ouverture de session sur le module fonctionnel intermédiaire et gestion de listes temporelles des utilisateurs se connectant à un certain module à un moment donné. Chaque utilisateur peut être identifié par un accès d'ouverture de session au module fonctionnel intermédiaire.

A titre d'exemple, chaque utilisateur peut être identifié par un accès d'ouverture de session dans le module fonctionnel intermédiaire.

Avantageusement, dans le cas par exemple de plusieurs modules consommateurs, par exemple connectés en même temps au module fonctionnel intermédiaire, ladite au moins une autre chaîne est déterminée à partir de définitions de priorité entre différents modules consommateur et/ou utilisateurs finaux. Par exemple, si chaque module consommateur a une liste de chaînes suivantes, la liste qui sera considérée est la liste du module consommateur ayant le plus haut niveau de priorité.

Selon un mode de réalisation préféré de l'invention, plusieurs de ladite au moins une autre chaîne peuvent être déterminées de telle sorte que le total des débits binaires de chaînes à prétraiter se situe sous un seuil prédéterminé. En effet, comme les chaînes peuvent être plus ou moins chiffrées ou peuvent fournir un niveau de qualité différent (haute ou basse définition), le nombre de chaînes additionnelles à prétraiter est ainsi limité par les débits binaires totaux afin de permettre un traitement fluide des chaînes par le module fonctionnel intermédiaire.

Selon l'invention, l'objet applicatif peut être contenu dans le flux vidéo de ladite au moins une autre chaîne. Selon une variante de l'invention, l'objet applicatif peut être contenu dans un espace mémoire distant, le prétraitement consistant à télécharger puis sauvegarder en mémoire la dernière version de cet objet applicatif.

Avantageusement, le prétraitement peut en outre consister à traiter par le module fonctionnel intermédiaire l'objet applicatif de façon à :
- déterminer des ressources externes, et
- sauvegarder ces ressources externes dans une mémoire cache en local.

Par ailleurs, lors de la mise en œuvre dudit objet applicatif par le module consommateur, un serveur proxy peut être utilisé pour accéder auxdites ressources externes. Ce mode de réalisation est notamment avantageux pour des applicatifs qui nécessitent beaucoup de ressources.

Dans un deuxième aspect, la présente invention concerne un module fonctionnel intermédiaire gérant une pluralité de chaînes délivrées par une plate-forme, ledit module fonctionnel intermédiaire comprenant un support de stockage lisible par ordinateur non transitoire encodé avec des instructions exécutables par ordinateur qui, une fois exécutées, effectue efficacement un procédé pour livrer un objet applicatif tel que décrit ci-avant.

D'autres avantages et caractéristiques de l'invention apparaîtront à l'examen de la description détaillée d'un mode de mise en œuvre nullement limitatif, et des dessins annexés, sur lesquels :
la figure 1 est une vue schématique illustrant une disposition selon la présente invention où un module fonctionnel intermédiaire est disposé entre un module producteur et un module consommateur ;
la figure 2 est une vue schématique illustrant un boîtier décodeur en tant que module fonctionnel intermédiaire connecté à un téléviseur en tant que module consommateur ;
la figure 3 est une vue schématique illustrant une étape d'abonnement d'un module fonctionnel intermédiaire selon l'invention ;
les figures 4a et 4b sont des vues simplifiées illustrant le prétraitement à l'intérieur d'un module fonctionnel intermédiaire pendant un changement de chaîne ; et
la figure 5 est une vue schématique illustrant un exemple de traitement de plusieurs modules consommateur par un module fonctionnel intermédiaire.

Alors que l'invention est sujette à diverses modifications et formes alternatives, des modes de réalisation spécifiques de celles-ci sont montrés à titre d'exemple sur les dessins et seront décrits ici en détail. Il faut toutefois comprendre que les dessins et la description détaillée ne sont pas censés limiter l'invention à la forme particulière divulguée, mais au contraire, l'invention doit couvrir tous les modifications, équivalents et alternatives entrant dans la portée de la présente invention telle que définie par les revendications annexées.

L'invention vise à proposer un procédé et un système permettant de diminuer le temps pour accéder à un objet applicatif contenu dans un flux vidéo numérique lors d'un changement de chaîne dans des récepteurs de télévision numériques au moyen d'un prétraitement du flux de transport. Dans des systèmes où le flux de transport a pour origine un tuner/démodulateur, au moins une mémoire tampon par tuner/démodulateur peut être prévue. Un tuner/démodulateur dans un récepteur de télévision numérique produit un flux de transport qui contient un ou plusieurs chaînes ou services de télévision. Le flux vidéo d'une chaîne peut contenir un objet applicatif destiné à fournir des fonctionnalités additionnelles à l'utilisateur. Une chaîne sélectionnée est destinée ensuite à être décodée avant transmission vers le module consommateur. Le décodage du flux vidéo d'une chaîne peut commencer rapidement alors que l'objet applicatif nécessaire pour la mise en œuvre des fonctionnalités additionnelles peut prendre un certain temps avant d'être récupéré dans le flux vidéo. En effet cet objet n'est pas continuellement contenu dans le flux vidéo, il est placé dans le flux à des instants différents. Ainsi lors d'un changement de chaîne, l'utilisateur doit attendre avant d'avoir accès à de nouvelles fonctionnalités.

Le procédé selon la présente invention vise à réduire le temps d'attente au moyen d'optimisations réalisées dans un module fonctionnel intermédiaire situé entre le module consommateur de flux vidéo (le client) et le module producteur des flux TV (« la plate-forme »). Cela est obtenu en utilisant des procédés visant à prévoir un jeu de chaînes suivantes qu'un utilisateur final pourrait choisir, en préréglant ces chaînes et en mettant en mémoire les objets applicatifs pour chacun des chaînes. Lorsqu'un utilisateur final sélectionne effectivement l'une des chaînes prévues, le module fonctionnel intermédiaire peut lire en même temps le flux vidéo et l'objet applicatif contenu dans la mémoire.

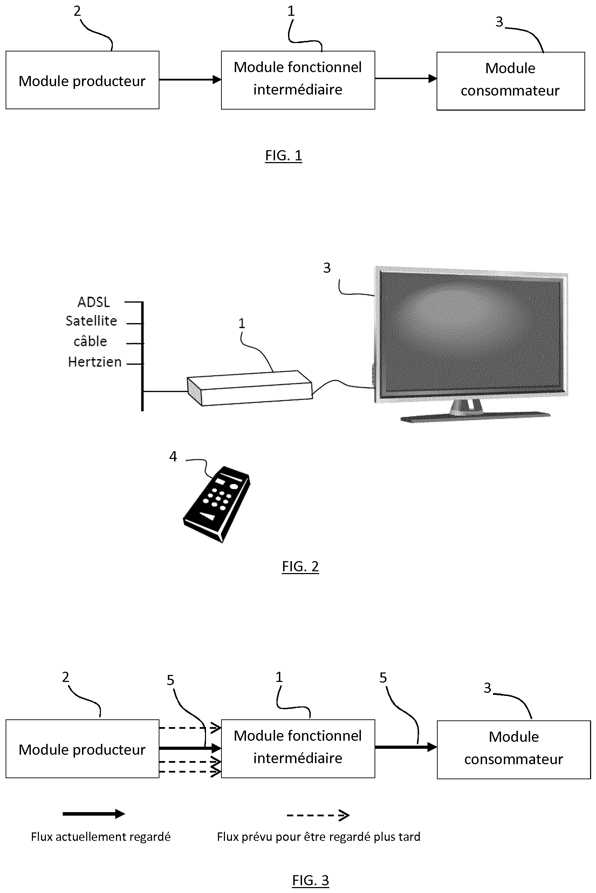

Selon un mode de réalisation préféré, le module fonctionnel intermédiaire est globalement désigné par 1 sur la figure 1. Ce module est un dispositif matériel ou un procédé/une fonction logiciel ou un mélange des deux qui se trouve entre une plate-forme qui est un module 2 produisant/diffusant en flux un contenu de média et un autre module 3 consommant un tel contenu.

La figure 2 illustre un mode de réalisation avantageux de l'invention où le module fonctionnel intermédiaire 1 est un boîtier décodeur équipé de moyens matériel et logiciel pour implémenter le procédé selon l'invention. Il est connecté à un téléviseur 3 qui est capable de reproduire une transmission TV audio/vidéo sous la forme de signaux de télévision. L'utilisateur commande le boîtier décodeur 1 par l'intermédiaire d'une télécommande à infrarouge 4. Les chaînes sur le téléviseur 3 passent par le boîtier décodeur 1 et peuvent provenir de tout type de support de transmission tel qu'IPTV (ADSL pour « Asymmetric Digital Subscriber Line » via la ligne téléphonique ou les fibres optiques), satellite, câble ou TV terrestre numérique par communication sans fil.

Le procédé selon l'invention peut être implémenté non pas dans un boîtier décodeur mais de manière intégrée au sein d'une TV ou d'un lecteur tel qu'un lecteur-enregistreur DVD connecté à une TV. Il peut être également implémenté dans une passerelle numérique.

Selon l'invention, sur la figure 3, un client s'abonne au module fonctionnel intermédiaire 1 (passerelle) à un flux de média en direct. Le module fonctionnel intermédiaire 1 quant à lui s'abonne au flux correspondant 5 sur le module producteur 2 (plate-forme), le flux 5 étant alors envoyé au module consommateur 3. Selon l'invention, le module fonctionnel intermédiaire s'abonne non seulement au flux 5 sur le module producteur 2, mais peut également s'abonner jusqu'à n flux additionnels 6 sur la plate-forme. Ces flux sont d'autres flux que celui en cours de diffusion et elles sont susceptibles d'être sélectionnés par la suite. Lesdits flux additionnels 6 sont prétraités à l'intérieur du module fonctionnel intermédiaire 1 en attendant un changement de chaînes. Ces n chaînes sont choisies ou prévues en prenant en compte des paramètres fixes et/ou variables. Une fois déterminées, les n chaînes additionnelles sont prétraitées sans être diffusées. Le prétraitement consiste à détecter les objets applicatifs et à les stocker dans des mémoires respectives sur le module fonctionnel intermédiaire 1. Ce prétraitement est réalisé en permanence de sorte que les objets applicatifs sont régulièrement mis à jour. Ainsi, ce sont les dernières versions qui sont disponibles dans les mémoires.

Lorsque le client a ultérieurement l'intention d'atteindre un autre flux, deux cas sont possibles :
- le flux n'est pas l'un des n flux pré-traités. Dans ce cas, le module fonctionnel intermédiaire 1 repasse à une étape d'abonnement directement au module producteur 2 ;
- il s'agit de l'un des flux pré-traités. Dans ce cas, le module fonctionnel intermédiaire 1 effectue les étapes suivantes :
- le module fonctionnel intermédiaire 1 commence la diffusion en continu du flux nouvellement sélectionné en direction du client, et instantanément délivre au module consommateur la dernière version de l'objet applicatif stocké en mémoire et relatif au flux nouvellement sélectionné ;
- le module fonctionnel intermédiaire 1 sélectionne un autre jeu de n flux pour pré-traitement en se basant sur les chaînes déjà sélectionnées.

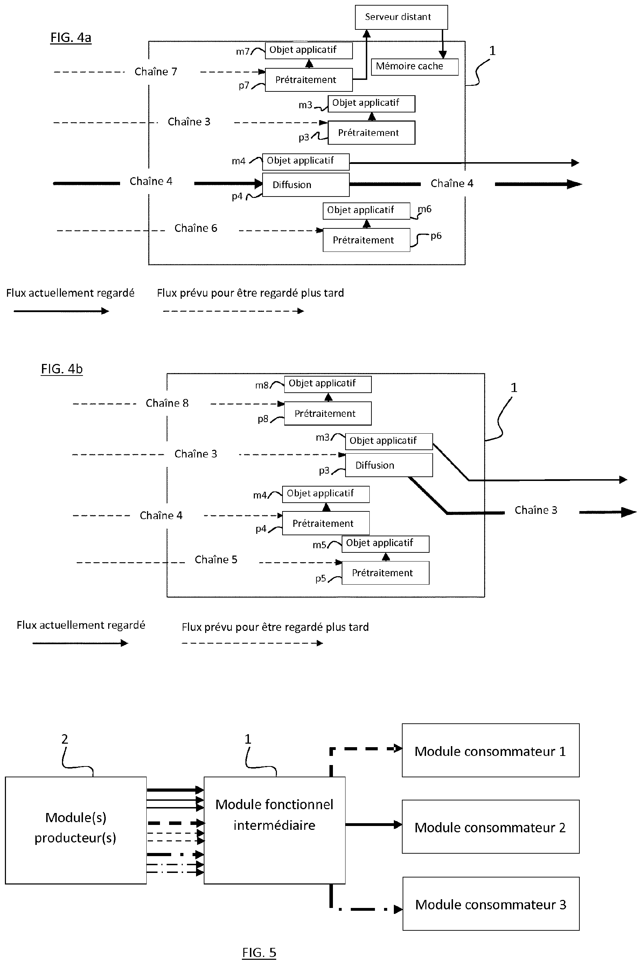

Les figures 4a et 4b illustrent un changement entre la chaîne 4 et la chaîne 3. Le module fonctionnel intermédiaire 1 reçoit le flux de la chaîne 4 en cours de diffusion. Il reçoit également conjointement trois autres chaînes : la chaîne 7, la chaîne 3 et la chaîne 6. Ces autres chaînes ont été préalablement identifiées comme chaînes susceptibles d'être sélectionnées ultérieurement par l'utilisateur. Chacune desdites autres chaînes subit un prétraitement consistant à identifier dans le flux de la chaîne correspondante, un objet applicatif contenu dans ce flux et à le stocker dans des espaces mémoires respectifs m7, m3 et m6. Chaque module de prétraitement P7, P3 et P6 est un bloc matériel ou bien représente une brique logicielle configurée pour réaliser la fonction de prétraitement. Cette opération est réalisée en permanence, l'objet applicatif étant alors constamment mis à jour.

En ce qui concerne le module P7 par exemple, la mise en œuvre de l'objet applicatif associé au flux vidéo de la chaîne 7 nécessite des ressources additionnelles. Pour ce faire, on utilise l'objet applicatif stocké dans la mémoire m7 pour identifier un serveur distant à partir duquel on télécharge dans une mémoire cache MC interne au module fonctionnelle intermédiaire lesdites ressources. Lorsque l'utilisateur basculera vers la chaîne 7, un proxy sera utilisé pour accéder en même temps aux ressources contenues dans la mémoire cache MC.

Sur la figure 4b, l'utilisateur utilise sa télécommande pour se régler sur la chaîne 3 pré-traitée selon l'invention. Immédiatement et directement, l'objet applicatif contenu dans la mémoire m3 est diffusé vers le module consommateur 3. Parallèlement, la chaîne 3 est diffusée vers le module consommateur 3. Un autre jeu de n chaînes additionnelles est déterminé et respectivement appliqué aux mémoires.

On peut utiliser différents procédés pour détecter quels flux nécessitent d'être pré-traités. En général, on pré-traite des flux dont l'utilisation/la visualisation est la plus probable dans une certaine situation. La probabilité pour qu'une certaine chaîne soit utilisée peut être calculée de différentes manières en prenant en compte plusieurs facteurs. Certains mécanismes et facteurs qui pourront être utilisés sont décrits ci-dessous.

Présélection basée sur un plan de service.

Dans le cas où un plan de service numéroté est disponible, on pourra sélectionner des flux voisins. A savoir : si la chaîne 5 est sélectionnée, on pourra par exemple présélectionner les chaînes 4 et 6. Ces chaînes sont typiquement choisies si un utilisateur zappe par l'intermédiaire d'une offre de services en utilisant les boutons de zapping P-/P+ de la télécommande.

Présélection basée sur le comportement passé de l'utilisateur.

Le module fonctionnel intermédiaire 1 peut apprendre les préférences d'un utilisateur en mémorisant quelles chaînes l'utilisateur sélectionne typiquement après une autre chaîne. Chaque fois qu'un utilisateur zappe, un compteur est incrémente pour la nouvelle chaîne sélectionnée dans une liste de « chaîne suivante » liée à la chaîne précédente.

Lorsqu'un utilisateur sélectionne ensuite une chaîne, le module fonctionnel intermédiaire 1 peut présélectionner les n entrées de décompte le plus élevé dans la liste de « chaîne suivante » de la chaîne nouvellement sélectionnée.

Des réglages fins supplémentaires sont possibles dans cette approche :
- on pourra enlever des entrées plus anciennes des listes de chaînes suivantes. Il faudra pour cela mémoriser des estampilles temporelles du moment où le zapping s'est produit. Cela permet l'adaptation à des comportements d'utilisateur qui peuvent changer avec le temps.
- On peut garder des listes de chaînes suivantes par module client. Cela peut être utile dans le cas où un certain module est utilisé de façon prédominante par un certain membre d'une famille alors qu'un autre module est utilisé principalement par un autre membre. En effet, le module fonctionnel intermédiaire 1 peut alimenter de multiples modules consommateurs comme décrit sur la figure 5, ainsi que de multiples modules producteurs.
- On peut garder des listes de chaînes suivantes par utilisateur. Cela permet les comportements les plus pointus en se basant sur les préférences/comportements des individus plutôt que sur le comportement plus global influencé par la famille entière. Avantageusement, on peut ainsi envisager un mécanisme qui puisse identifier quel utilisateur commande un module consommateur donné à un certain moment. Cela peut être accompli de plusieurs manières, comprenant, sans s'y limiter, d'ouvrir une session sur la passerelle et des listes temporelles de qui se connecte à un certain module à un moment donné.

Les limites de la présélection.

La quantité de chaînes qui peuvent être mises en mémoire à un certain instant peut typiquement être limitée par des contraintes physiques. Il se peut que le mécanisme de sélection ait besoin de prendre cela en compte. Lorsqu'un utilisateur sélectionne une nouvelle chaîne, une nouvelle liste de chaînes à pré-traiter a besoin d'être créée. Certains éléments qui peuvent être considérés pour créer cette nouvelle liste peuvent par exemple être :
- le nombre de flux qui sont en cours de pré-traitement,
- les débits binaires de ces flux,
- le nombre de flux que l'on souhaite pré-traiter suite à la sélection de nouveaux flux,
- des limitations techniques (nombre de flux, débit binaire total qui est reçu/mémorisé,...)
- disponibilité de multiples versions de débits binaires d'un flux de contenu donné (d'après les technologies couramment connues comme la diffusion en continu à débit binaire adaptatif),
- le nombre de tuners disponibles si le flux de contenu est reçu d'un module producteur qui est un tuner (satellite, TNT, câble, etc.),
- priorité des utilisateurs visualisant des chaînes à travers le module intermédiaire. Certains modules client peuvent avoir une priorité/préséance plus élevée que d'autres. De même, certains utilisateurs ayant ouvert une session pourront avoir une priorité plus élevée que d'autres. Des modules ou utilisateurs de priorité plus élevée auraient plus de flux pré-mémorisés que d'autres modules/utilisateurs pour augmenter leur probabilité d'occurrence d'un flux pré-mémorisé lorsqu'ils auront sélectionné un nouveau flux à regarder.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour livrer un objet applicatif depuis un module fonctionnel intermédiaire vers un module consommateur, ce module fonctionnel intermédiaire étant apte à gérer une pluralité de chaînes délivrées par une plate-forme, ce procédé comprenant :
- lors de la diffusion temps réel d'une chaîne depuis le module fonctionnel intermédiaire, une étape d'abonnement par le module fonctionnel intermédiaire à au moins une autre chaîne susceptible d'être sélectionnée par la suite,
- une étape de prétraitement d'au moins ladite autre chaîne susceptible d'être sélectionnée par la suite, le prétraitement consistant à sauvegarder en mémoire la dernière version de l'objet applicatif dédié au flux vidéo numérique de ladite autre chaîne, et
- une étape de transmission dudit objet applicatif vers le module consommateur dès un changement de chaîne depuis la chaîne en cours de diffusion vers ladite autre chaîne.

2. Procédé selon la revendication 1, **caractérisé en ce que** ladite au moins une autre chaîne est déterminée à partir d'un plan de numérotation de chaînes.

3. Procédé selon la revendication 2, **caractérisé en ce qu'**on détermine dans le module fonctionnel intermédiaire une pluralité d'autres chaînes qui sont voisines de la chaîne en cours de diffusion.

4. Procédé selon la revendication 1, **caractérisé en ce que** ladite au moins une autre chaîne est déterminée à partir d'une analyse statistique de chaînes sélectionnées dans l'historique.

5. Procédé selon la revendication 4, **caractérisé en ce qu'**en cas d'une pluralité de modules consommateurs, ladite au moins une autre chaîne est déterminée à partir d'une analyse statistique de chaînes sélectionnées par module consommateur dans l'historique.

6. Procédé selon la revendication 4 ou 5, **caractérisé en ce qu'**en cas d'une pluralité d'utilisateurs, ladite au moins une autre chaîne est déterminée à partir d'une analyse statistique de chaînes sélectionnées par utilisateur dans l'historique.

7. Procédé selon la revendication 6, **caractérisé en ce que** chaque utilisateur est identifié par un accès d'ouverture de session dans le module fonctionnel intermédiaire.

8. Procédé selon l'une quelconque des revendications 5 à 7, **caractérisé en ce que** ladite au moins une autre chaîne est déterminée à partir de définitions de priorité entre différents modules consommateur et/ou utilisateurs finaux.

9. Procédé selon l'une quelconque des revendications précédentes, **caractérisé en ce que** plusieurs de ladite au moins une autre chaîne sont déterminées de telle sorte que le total des débits binaires de chaînes à prétraiter se situe sous un seuil prédéterminé.

10. Procédé selon l'une quelconque des revendications précédentes, **caractérisé en ce que** l'objet applicatif est contenu dans le flux vidéo de ladite au moins une autre chaîne.

11. Procédé selon l'une quelconque des revendications 1 à 9, **caractérisé en ce que** l'objet applicatif est contenu dans un espace mémoire distant, le prétraitement consistant à télécharger puis sauvegarder en mémoire la dernière version de cet objet applicatif.

12. Procédé selon l'une quelconque des revendications précédentes, **caractérisé en ce que** le prétraitement consiste en outre à traiter par le module fonctionnel intermédiaire l'objet applicatif de façon à :
- déterminer des ressources externes, et
- sauvegarder ces ressources externes dans une mémoire cache en local ;
et **en ce que** lors de la mise en œuvre dudit objet applicatif par le module consommateur, un serveur proxy est utilisé pour accéder auxdites ressources externes.

13. Module fonctionnel intermédiaire gérant une pluralité de chaînes délivrées par une plate-forme, ledit module fonctionnel intermédiaire comprenant un support de stockage lisible par ordinateur non transitoire encodé avec des instructions exécutables par ordinateur qui, une fois exécutées, effectue efficacement un procédé pour livrer un objet applicatif depuis ce module fonctionnel intermédiaire vers un module consommateur, ce procédé comprenant :
- lors de la diffusion temps réel d'une chaîne depuis le module fonctionnel intermédiaire, une étape d'abonnement par le module fonctionnel intermédiaire à au moins une autre chaîne susceptible d'être sélectionnée par la suite,
- une étape de prétraitement d'au moins ladite autre chaîne susceptible d'être sélectionnée par la suite, le prétraitement consistant à sauvegarder en mémoire la dernière version de l'objet applicatif dédié au flux vidéo numérique de ladite autre chaîne, et
- une étape de transmission dudit objet applicatif vers le module consommateur dès un changement de chaîne depuis la chaîne en cours de diffusion vers ladite autre chaîne.

## Patentansprüche

1. Verfahren für das Übermitteln eines Anwendungsobjektes von einem funktionellen Vermittlungsmodul an ein Verbrauchermodul, wobei das funktionelle Vermittlungsmodul geeignet ist, eine Vielzahl der von einer Plattform ausgesendeten Sender zu verwalten, wobei das Verfahren aufweist:
- einen Schritt des Abonnierens zumindest eines wahrscheinlich in der Folge ausgewählten anderen Senders durch das funktionelle Vermittlungsmodul während der Echtzeitübertragung eines Senders von dem funktionellen Vermittlungsmodul,
- einen Schritt des Vorbearbeitens des zumindest einen anderen wahrscheinlich in der Folge ausgewählten Senders, wobei die Vorbearbeitung das Speichern der letzten Version des Anwendungsobjektes, das dem numerischen Video-Stream des anderen Senders zugeordnet ist, umfasst, und
- einen Schritt des Übertragens des Anwendungsobjektes an das Verbrauchermodul ab einem Wechsel von dem gerade ausgestrahlten Sender zu dem anderen Sender.

2. Verfahren nach Anspruch 1, **dadurch gekennzeichnet, dass** der zumindest eine andere Sender auf der Grundlage eines Nummerierungsverzeichnisses der Sender bestimmt wird.

3. Verfahren nach Anspruch 2, **dadurch gekennzeichnet, dass** in dem funktionellen Vermittlungsmodul eine Vielzahl anderer Sender bestimmt wird, die mit dem gerade ausgestrahlten Sender benachbart sind.

4. Verfahren nach Anspruch 1, **dadurch gekennzeichnet, dass** der zumindest eine andere Sender auf der Grundlage einer statistischen Analyse der in der Vergangenheit ausgewählten Sender bestimmt wird.

5. Verfahren nach Anspruch 4, **dadurch gekennzeichnet, dass** in dem Fall einer Vielzahl von Verbrauchermodulen der zumindest eine andere Sender auf der Grundlage einer statistischen Analyse der in der Vergangenheit durch das Verbrauchermodul ausgewählten Sender bestimmt wird.

6. Verfahren nach Anspruch 4 oder 5, **dadurch gekennzeichnet, dass** in dem Fall einer Vielzahl von Nutzern der zumindest eine andere Sender auf der Grundlage einer statistischen Analyse der in der Vergangenheit durch den Nutzer ausgewählten Sender bestimmt wird.

7. Verfahren nach Anspruch 6, **dadurch gekennzeichnet, dass** jeder Nutzer durch einen Zugang für das Öffnen einer Sitzung in dem funktionellen Vermittlungsmodul identifiziert wird.

8. Verfahren nach einem der vorstehenden Ansprüche 5 bis 7, **dadurch gekennzeichnet, dass** der zumindest eine andere Sender auf der Grundlage von Prioritätsdefinitionen zwischen verschiedenen Nutzermodulen und/oder finalen Nutzern bestimmt wird.

9. Verfahren nach einem der vorstehenden Ansprüche, **dadurch gekennzeichnet, dass** mehrere des zumindest einen anderen Senders so bestimmt werden, dass die Gesamtheit der Bitraten der vorzubearbeitenden Sender sich unter einem vorbestimmten Schwellwert befindet.

10. Verfahren nach einem der vorstehenden Ansprüche, **dadurch gekennzeichnet, dass** das Anwendungsobjekt in dem Videostream des zumindest einen anderen Senders enthalten ist.

11. Verfahren nach einem der vorstehenden Ansprüche 1 bis 9, **dadurch gekennzeichnet, dass** das Anwendungsobjekt in einem Remotespeicherplatz enthalten ist, wobei die Vorbearbeitung das Herunterladen und Abspeichern der letzten Version des Anwendungsobjektes in einem Speicherplatz umfasst.

12. Verfahren nach einem der vorstehenden Ansprüche, **dadurch gekennzeichnet, dass** die Vorbearbeitung weiterhin ein Bearbeiten des Anwendungsobjektes durch das funktionelle Vermittlungsmodul umfasst, sodass:
- ein Bestimmen der externen Ressourcen, und
- das Abspeichern dieser externen Ressourcen in einem lokalen Cache-Speicher erfolgt;
und dass während der Umsetzung des Anwendungsobjektes durch das Verbrauchermodul ein Proxy-Server für den Zugriff auf die externen Ressourcen genutzt wird.

13. Funktionelles Vermittlungsmodul für das Verwalten einer Vielzahl von durch eine Plattform ausgesendeten Sendern, wobei das funktionelle Vermittlungsmodul ein nicht-transientes, computerlesbares Speichermedium aufweist, das mit durch den Computer ausführbaren Anweisungen codiert ist und bei Ausführung effektiv ein Verfahren für das Liefern eines Anwendungsobjektes von dem funktionellen Vermittlungsmodul an ein Verbrauchermodul durchführt, wobei das Verfahren aufweist:
- einen Schritt des Abonnierens zumindest eines wahrscheinlich in der Folge ausgewählten anderen Senders durch das funktionelle Vermittlungsmodul während der Übertragung in Echtzeit eines Senders von dem funktionellen Vermittlungsmodul,
- einen Schritt des Vorbearbeitens des zumindest einen anderen wahrscheinlich in der Folge ausgewählten Senders, wobei die Vorbearbeitung in dem Abspeichern der letzten Version des Anwendungsobjektes, das dem numerischen Video-Stream des anderen Senders zugeordnet ist, besteht, und
- einen Schritt des Übermittelns des Anwendungsobjektes an das Verbrauchermodul ab einem Wechsel ,von dem gerade ausgestrahlten Sender zu dem anderen Sender.

## Claims

1. Method for delivering an application object from an intermediate functional module to a consumer module, this intermediate functional module being able to manage a plurality of delivered channels by a platform, this method comprising:
- during the real-time broadcast of a channel from the intermediate functional module, a step of subscribing by the intermediate functional module to at least one other channel likely to be selected next,
- a step of pre-processing at least said other channel likely to be selected next, the pre-processing involving saving to a memory the last version of the application object dedicated to the digital video stream from said other channel, and
- a step of transmission of said application object to the consumer module once a channel changes from the channel being broadcast to said other channel.

2. Method according to claim 1, **characterized in that** said at least one other channel is determined from a channel numbering plan.

3. Method according to claim 2, **characterized in that** a plurality of other channels which are related to the channel being broadcast is determined in the intermediate functional module.

4. Method according to claim 1, **characterized in that** said at least one other channel is determined from a statistical analysis of channels selected in the history.

5. Method according to claim 4, **characterized in that**, in the case of a plurality of consumer modules, said at least one other channel is determined from a statistical analysis of channels selected, per consumer module, in the history.

6. Method according to claim 4 or 5, **characterized in that**, in the case of a plurality of users, said at least one other channel is determined from a statistical analysis of channels selected, per user, in the history.

7. Method according to claim 6, **characterized in that** each user is identified by sign-in access in the intermediate functional module.

8. Method according to any one of claims 5 to 7, **characterized in that** said at least one other channel is determined from priority settings between different consumer modules and/or end users.

9. Method according to any one of the preceding claims, **characterized in that** several of said at least one other channel are determined such that the total bit rate of channels to be pre-processed is below a predetermined threshold.

10. Method according to any one of the preceding claims, **characterized in that** the application object is contained in the video stream of said at least one other channel.

11. Method according to any one of claims 1 to 9, **characterized in that** the application object is contained in a remote memory space, the pre-processing involving downloading then saving to the memory the last version of this application object.

12. Method according to any one of the preceding claims, **characterized in that** the pre-processing also involves processing the application object by the intermediate functional module so as to:
- determine external resources, and
- save these external resources in a local cache memory;
and **in that**, during the implementation of said application object by the consumer module, a proxy server is used to access said external resources.

13. Intermediate functional module managing a plurality of delivered channels by a platform, said intermediate functional module comprising a non-transitory computer-readable storage medium encoded with instructions executable by a computer which, once executed, effectively carries out a method for delivering an application object from this intermediate functional module to a consumer module, this method comprising:
- during the real-time broadcast of a channel from the intermediate functional module, a step of subscribing by the intermediate functional module to at least one other channel likely to be selected next,
- a step of pre-processing at least said other channel likely to be selected next, the pre-processing involving saving to a memory the last version of the application object dedicated to the digital video stream from said other channel, and
- a step of transmission of said application object to the consumer module once a channel changes from the channel being broadcast to said other channel.
